# EUROPEAN PATENT APPLICATION

(11) **EP 2 755 316 A1**
(43) Date of publication of application: **16.07.2014**
(21) Application number: 12829521.9
(22) Date of filing: 13.08.2012
(51) Int. Cl.: H02M 7/537

(54) **POWER CONVERSION DEVICE AND POWER CONVERSION METHOD**

(30) Priority: 05.09.2011 JP 2011192492
(71) Applicant: Nissan Motor Co., Ltd, Yokohama-shi, Kanagawa 221-0023 (JP)
(72) Inventor: SASAKI, Kensuke, Kanagawa 243-0123 (JP); MIZUKOSHI, Yukio, Kanagawa 243-0123 (JP); NAGAI, Yoshiyuki, Kanagawa 243-0123 (JP)
(74) Representative: Hoefer & Partner
(86) International application number: PCT/JP2012/070591
(87) International publication number: WO 2013/035495

(57) **Abstract**

A power conversion device (100) generates drive command signals for switch elements (S 1 to S6) of multiple phases, the drive command signals designed to control connecting and disconnecting operations of the multiple phase switch elements in such a way that a direction of a current change attributed to a connecting or disconnecting operation of one switch element and a direction of a current change attributed to a connecting or disconnecting operation of another switch element are opposite to each other. Furthermore, the power conversion device corrects output timings of the drive command signals to be outputted to the switch elements so as to synchronize connecting and disconnecting timings of the switch elements with each other.

## Description

### TECHNICAL FIELD

The present invention relates to a power conversion device and a power conversion method to convert DC power into AC power, or more specifically, to a technique for suppressing a rapid current change to prevent application of a high surge voltage to a switch element.

### BACKGROUND ART

A power conversion device configured to supply electric power for driving a motor installed in a vehicle performs on and off control of multiple switch elements. For this reason, a rapid current change may occur on a common bus connected to a DC power supply, which may cause a high surge voltage (L×di/dt) attributed to parasitic inductance (L). In order to suppress such a current change, Patent Literature 1 (International Patent Application Publication No. WO2005/081389), for example, discloses a technique of driving switch elements of multiple phases (such as the U phase, the V phase, and the W phase) at different timings so as to prevent the switch elements from being turned on at the same time, and thus to suppress a rapid current change.

### CITATION LIST

### PATENT LITERATURE

Patent Literature 1: International Patent Application Publication No. WO2005/081389

### SUMMARY OF INVENTION

However, although the technique of the above-described Patent Literature 1 may be able to suppress an increase in current change rate (di/dt) which occurs when the switch elements turn on at the same time while the currents flow in a same direction, there still remains a problem that this technique cannot suppress a rapid current change that occurs when one of the switch elements turns on or off in dependently.

The present invention has been made to solve the above-described problem of the related art. An object of the present invention is to provide a power conversion device and a power conversion method, which are capable of suppressing a rapid current change caused when one of switch elements is turned on or off.

For the purpose of achieving the foregoing object, one aspect of the present invention is a power conversion device including: switch elements of multiple phases connected to a common bus; and a control unit configured to control the switch elements. The control unit includes: a drive command generation unit configured to generate drive command signals for the switch elements, the drive command signals designed to control connecting and disconnecting operations of the switch elements of the multiple phases in such a way that a direction of a current change attributed to a connecting or disconnecting operation of one switch element and a direction of a current change attributed to a connecting or disconnecting operation of another switch element are opposite to each other; and a delay correction unit configured to correct output timings of the drive command signals to be outputted to the switch elements so as to synchronize connecting and disconnecting timings of the switch elements with each other.

### BRIEF DESCRIPTION OF DRAWINGS

[Fig. 1] Fig. 1 is a circuit diagram showing a configuration of a power conversion device according to an embodiment of the present invention.
[Fig. 2] Fig. 2 is a block diagram showing a configuration of a motor control device, which includes the power conversion device according to the embodiment of the present invention.
[Fig. 3] Fig. 3 shows timing charts illustrating drive pulses generated by the power conversion device according to the embodiment of the present invention and also showing pulses obtained by shifting the drive pulses, in which Fig. 3(a) shows a carrier signal s1 and voltage command values vu and vv, Fig. 3(b) shows a drive pulse Dup,
Fig. 3(c) shows a drive pulse Dvp, Fig. 3(d) shows a drive pulse Tvp generated in accordance with a first procedure, and Fig. 3(e) shows a drive pulse Tvp generated in accordance with a second procedure.
[Fig. 4] Figs. 4(a), 4(b), and 4(c) are timing charts respectively showing changes in U-, V- and W-phase currents, which are generated by the power conversion device according to the embodiment of the present invention.
[Fig. 5] Fig. 5 is an explanatory diagram showing a current at a point immediately before a V-phase switch element shifts from on state to off state in a conventional power conversion device.
[Fig. 6] Fig. 6 is an explanatory diagram showing a current at a point immediately after the V-phase switch element shifted from the on state to the off state in the conventional power conversion device.
[Fig. 7] Fig. 7 is an explanatory diagram showing current changes occurring when the V-phase switch element shifted from the on state to the off state in the conventional power conversion device.
[Fig. 8] Fig. 8 is a characteristic diagram showing a change in a current flowing on a capacitor when the V-phase switch element shifted from the on state to the off state in the conventional power conversion device.

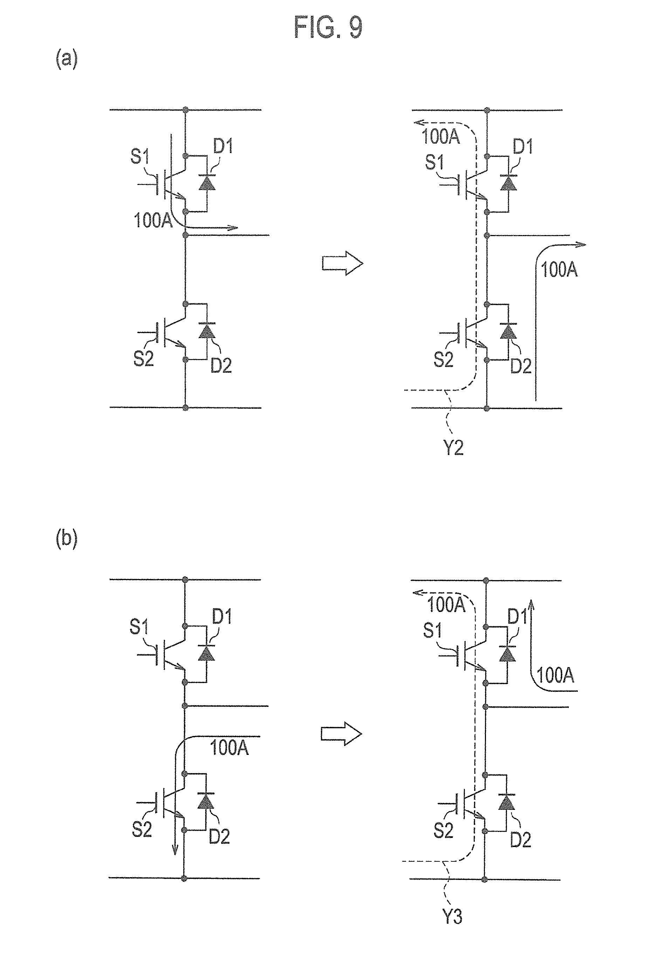

[Fig. 9] Fig. 9 shows characteristic diagrams illustrating the direction and magnitude of a current flowing to the capacitor when a U-phase switch element shifted from on state to off state in the conventional power conversion device. Fig. 9(a) shows a current change in the U phase at a moment of a shift of an upper switch element S1 from the on state to the off state while a positive current was flowing to a motor 13, and Fig. 9(b) shows a current change in the U phase at a moment of a shift of a lower switch element S2 from the on state to the off state while a negative current was flowing to the motor 13.

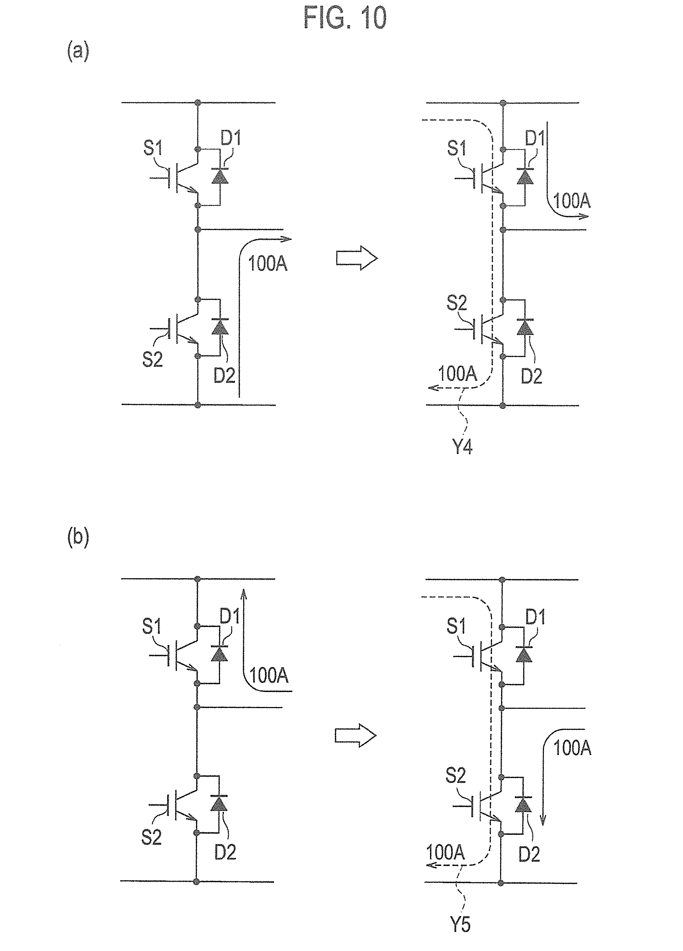

[Fig. 10] Fig. 10 shows characteristic diagrams illustrating the direction and magnitude of a current flowing to the capacitor when a U-phase switch element shifted from the off state to the on state in the conventional power conversion device. Fig. 10(a) shows a current change in the U phase at a moment of a shift of the upper switch element S1 from the off state to the on state while the positive current was flowing to the motor 13, and Fig. 10(b) shows a current change in the U phase at a moment of a shift of the lower switch element S1 from the off state to the on state while the negative current was flowing to the motor 13.
[Fig. 11] Fig. 11 is an explanatory diagram of the generation of drive pulses by a power conversion device according to an embodiment of the present invention by use of relations between a carrier signal and voltage command values.
[Fig. 12] Fig. 12 is an explanatory diagram of the shift of the drive pulses generated on the basis of the carrier signal and the voltage command values by the power conversion device according to the embodiment of the present invention shifts.
[Fig. 13] Fig. 13 shows explanatory diagram illustrating changes in a current flowing to a capacitor, in which Fig. 13(a) shows the current in a case where the switch element S1 is in the on state and a switch element S3 is in the off state, Fig. 13(b) shows the current in a case where the switch element S1 is in the off state and the switch element S3 is in the off state, and Fig. 13(c) shows the case in a case where the switch element S1 is in the on state and the switch element S3 is in the on state.
[Fig. 14] Fig. 14 is a characteristic diagram showing a current flowing on a switch element and voltage changes occurring in the switch element when a drive command is outputted to the switch element.
[Fig. 15] Fig. 15 is a block diagram showing a detailed configuration of a delay correction unit according to a first embodiment of the present invention.
[Fig. 16] Fig. 16 shows explanatory diagrams illustrating timings to turn off a U-phase upper arm switch element and timings to turn on a V-phase lower arm switch element, in which Fig. 16(a) shows a state before correction of delay time period and Fig. 16(b) shows a state after the correction of delay time period.
[Fig. 17] Fig. 17 is a characteristic diagram showing changes in delay time period relative to currents and ambient temperatures when a switch element is turned on.
[Fig. 18] Fig. 18 is a characteristic diagram showing changes in the delay time period relative to the currents and the ambient temperatures when the switch element is turned off.
[Fig. 19] Fig. 19 is a block diagram showing a detailed configuration of a delay correction unit according to a second embodiment of the present invention.

### DESCRIPTION OF EMBODIMENTS

Embodiments of the present invention will be described below with reference to the drawings.

### [Description of First Embodiment]

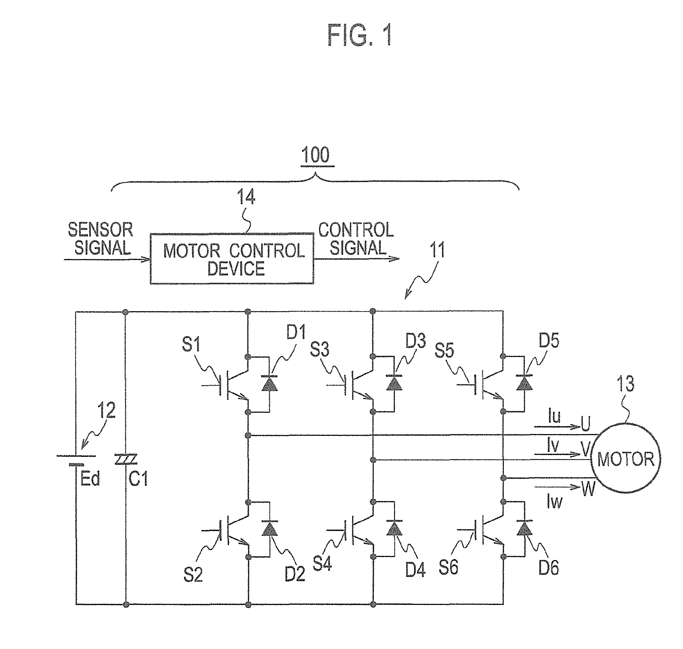

Fig. 1 is a circuit diagram showing configurations of a power conversion device 100 according to an embodiment of the present invention and of a motor 13 which is driven by receiving power supply from the power conversion device 100. Here, the embodiment shows an example of the power conversion device 100 configured to convert a direct current into a three-phase alternating current. However, the converted alternating current is not limited only to the three-phase alternating current but may also be other polyphase alternating currents having four or more phases.

As shown in Fig. 1, the power conversion device 100 includes an inverter device 11 and a motor control device (a control unit) 14.

The inverter device 11 includes: a DC power supply 12 configured to supply a DC voltage Ed; and a capacitor C1 connected to the DC power supply 12. The inverter device 11 further includes: switch elements S1, S2, S3, S4, S5, and S6 each using an IGBT (insulated gate bipolar transistor); and diodes D1, D2, D3, D4, D5, and D6 which are connected anti-parallel to the corresponding switching elements S1 to S6. In addition, each of pairs of the switch elements connected in series, namely the paired switch elements S1 and S2, the paired switch elements S3 and S4, and the paired switch elements S5 and S6, constitute an upper arm and a lower arm of each phase of the inverter device 11. Note that the switch elements are not limited only to the IGBTs.

An emitter of the switch element S1 is connected to a collector of the switch element S2, and a node therebetween forms an output point of U phase of the three-phase alternating current, which is connected to U phase of the motor 13. Similarly, an emitter of the switch element S3 is connected to a collector of the switch element S4, and a node therebetween forms an output point of V phase of the three-phase alternating current, which is connected to V phase of the motor 13. Likewise, an emitter of the switch element S5 is connected to a collector of the switch element S6, and a node therebetween forms an output point of W phase of the three-phase alternating current, which is connected to W phase of the motor 13.

Collectors of the switch elements S1, S3, and S5 are connected to a positive electrode of the DC power supply 12 via a common bus, and emitters of the switch elements S2, S4, and S6 are connected to a negative electrode of the DC power supply 12 via the other common bus. Gates of the switch elements S1 to S6 are driven by control signals outputted from the motor control device 14.

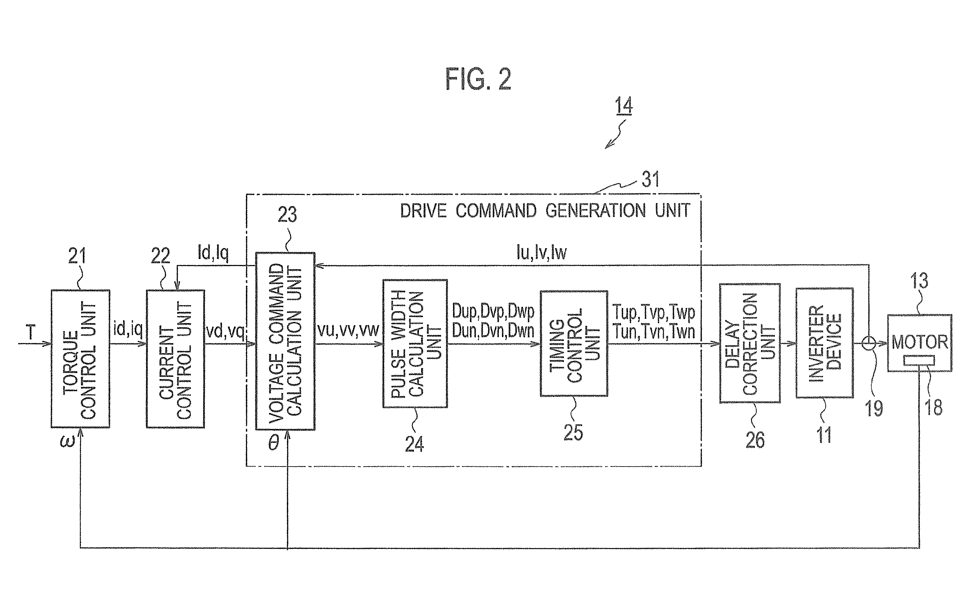

The control signals for performing PMW control of the switch elements S1 to S6 are generated by the motor control device 14 on the basis of: phase load currents Iu, Iv, and Iw which flow to the motor 13 and are detected by a current sensor (reference sign 19 in Fig. 2); a rotational position of the motor 13 detected by a rotational frequency sensor (reference sign 18 in Fig. 2); and a torque command value provided from a host device which is not illustrated. The motor control device 14 outputs the control signals to the gates of the switch elements S 1 to S6.

Although not limited only to the following, in this embodiment, the motor control device 14 is formed from a microprocessor which includes an arithmetic processing unit CPU, a program ROM, a work RAM, and an input-output interface. Hence, control functions of the motor control device 14 are realized by the CPU executing programs stored in the ROM.

Next, a detailed configuration of the motor control device (the control unit) 14 configured to control the inverter device 11 shown in Fig. 1 will be described with reference to a block diagram shown in Fig. 2. As shown in Fig. 2, the motor control device 14 is configured to control the motor 13 for driving a vehicle, for example, and includes a torque control unit 21, a current control unit 22, a drive command generation unit 31, and a delay correction unit 26. In addition, the drive command generation unit 31 includes a voltage command calculation unit 23, a pulse width calculation unit 24, and a timing control unit 25. Further, the drive command generation unit 31 generates the drive signals for the switch elements S1 to S6 provided in the inverter device 11 in accordance with a method to be described later, and outputs the drive signals to the delay correction unit 26. The delay correction unit 26 corrects output timings of the drive signals and outputs the corrected drive signals to the gates of the switch elements S1 to S6. Thus, the motor control device drives the inverter device 11. In the meantime, the power conversion device 100 includes the current sensor 19 configured to detect the currents flowing on the motor 13.

The torque control unit 21 calculates d- and q-axis current command values id and iq of the motor 13 based on a torque command value T provided from outside and on a motor rotational frequency ω detected by the rotational frequency sensor 18 configured to detect the number of revolutions of the motor 13.

Based on the d- and q-axis current command values id and iq as well as d- and q-axis current values Id and Iq, the current control unit 22 calculates d- and q-axis voltage command values vd and vq for making the command values match actual values. Here, the d- and q-axis current values Id and Iq are calculated by: detecting the (U-, V-and W-phase) currents iu, iv, and iw of the motor 13 with the current sensor 19; and then converting the detected currents into the d- and q-axis current values Id and Iq with the voltage command value calculation unit 23. Since the sum of the phase currents of the motor 13 is equal to zero, the three phase currents iu, iv, and iw of the motor 13 can be acquired by detecting at least the two phase currents iu and iv.

The voltage command calculation unit 23 of the drive command generation unit 31 converts the d- and q-axis voltage command values vd and vq into three phase output voltage command values vu, vv, and vw.

The pulse width calculation unit 24 generates drive pulses Dup, Dun, Dvp, Dvn, Dwp, and Dwn of the inverter device 11 corresponding to the U-, V- and W-phase voltage command values vu, vv, and vw outputted from the voltage command calculation unit 23, and outputs the drive pulses to the timing control unit 25. Here, it is possible to use the current command values instead of the volume command values.

In order to control the timings to turn on and off the switch elements S 1 to S6 provided in the inverter device 11, the timing control unit 25 generates drive pulses Tup, Tun, Tvp, Tvn, Twp, and Twn, as resulting from the modification in accordance with a method to be described later, and outputs the modified drive pulses to the delay correction unit 26. Here, the signs Tup and Tun show the drive pulses to be supplied to the switch element S1 and S2 located on the U-phase upper and lower stages, respectively. The signs Tvp and Tvn show the drive pulses to be supplied to the switch element S3 and S4 located on the V-phase upper and lower stages, respectively. The signs Twp and Twn show the drive pulses to be supplied to the switch element S5 and S6 located on the W-phase upper and lower stages, respectively.

The delay correction unit 26 calculates a delay time period between an output timing of each drive pulse for the corresponding switch element outputted from the timing control unit 25 and an actual timing of connection or disconnection of the switching element Then, the delay correction unit 26 corrects the output timing of each drive pulse outputted from the timing control unit 25 on the basis of the delay time period.

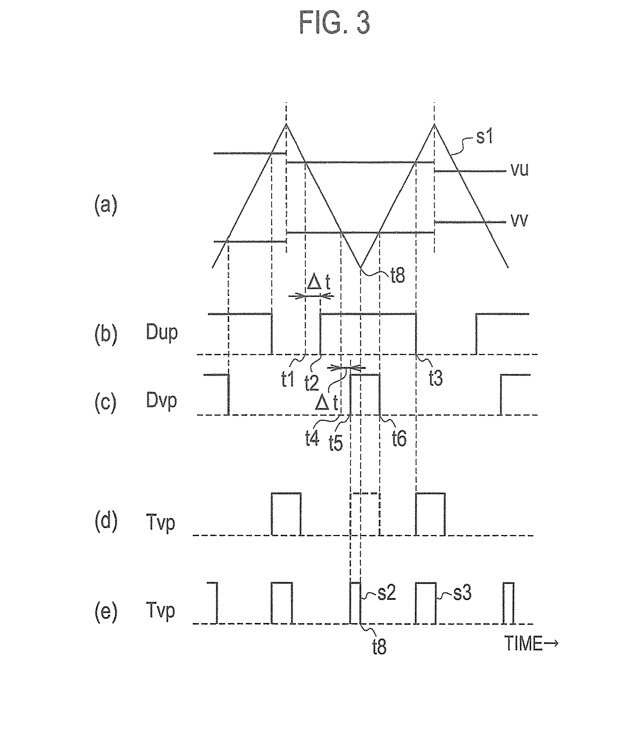

Next, procedures for generation of the drive pulses Dup, Dun, Dvp, Dvn, Dwp, and Dwn to be outputted to the switch elements S1 to S6 from the three phase output voltage command values vu, vv, and vw by use of the pulse width calculation unit 24 shown in Fig. 2 will be described with reference to timing charts shown in Fig. 3. It is to be noted that for the purpose of simplification of the explanation, Fig. 3 shows only the case of generating the drive pulses Dup (the drive pulse to be supplied to the switch element S1) and Dvp (the drive pulse to be supplied to the switch element S3) of the upper arms from the two phase voltage command values vu and vv.

When a carrier signal s1 in the form of a triangular wave shown in Fig. 3(a) is supplied, the pulse width calculation unit 24 compares the carrier signal s1 with each of the voltage command values vu and vv. Then, for the upper arm, the pulse width calculation unit 24 generates a drive pulse which is in the on state while the voltage command value is greater than the carrier signal s1, and which is in the off state while the voltage command value is smaller than the carrier signal s 1. For the lower arm, the pulse width calculation unit 24 generates a drive pulse which is in the on state while the voltage command value is smaller than the carrier signal S1, and which is in the off state while the voltage command value is greater than the carrier signal S1. In addition, the pulse width calculation unit 24 provides dead time by delaying the time to switch the pulse from the off state to the on state. The provision of the dead time can prevent a short circuit between the upper and lower arms.

Since the voltage command value vu of the U-phase upper arm exceeds the carrier signal s1 at time t1, as shown in Fig. 3(b), the drive pulse Dup is turned on at time t2, which is behind the time t1 by an amount Δt. The voltage command value vu falls below the carrier signal s1 at time t3. Hence, the drive pulse Dup is turned off at the time t3. That is to say, the drive pulse Dup is formed as shown in Fig. 3(b).

Similarly, the voltage command value vv of the V-phase upper arm exceeds the carrier signal s1 at time t4. Hence, as shown in Fig. 3(c), the drive pulse Dvp is turned on at time t5, which is behind the time t4 by the amount Δt. The voltage command value w falls below the carrier signal s1 at time t6. Hence, the drive pulse Dvp is turned off at the time t6. That is to say, the drive pulse Dvp is formed as shown in Fig. 3(c). This is the case with the voltage command value vw of the W phase, too, and is omitted in Fig. 3.

Next, a description will be given of a first procedure in which the timing control unit 25 shown in Fig. 2 generates the drive pulses Tup, Tun, Tvp, Tvn, Twp, and Twn by shifting phases of the drive pulses Dup, Dun, Dvp, Dvn, Dwp, and Dwn, respectively. Here, the description will be given of an example of generating the drive pulse Tvp by modifying the timing of the drive pulse Dvp of the V-phase upper arm (the switch element S3). In other words, the drive pulse Tvp as shown in Fig. 3(d) is generated by shifting the phase of the drive pulse Dvp shown in Fig. 3(c).

The procedure for modifying the drive pulse will now be described. First, when the voltage command value vv exceeds the carrier signal s1 at the time t4, the drive pulse Tvp is not turned on at the time t5 after the lapse of the period Δt. Instead, a time period before the voltage command value vv falls below the carrier signal s1, or a time period between the time t5 and the time t6 (a duty width) is obtained and this duty width is recorded. Thereafter, the drive pulse Tvp is turned on at the time t3 when the drive pulse Dup is turned off. The drive pulse Tvp is maintained in the on state for the duty width, and is then turned off. As a consequence, the drive pulse Tvp is modified to the drive pulse as shown in Fig. 3(d). Here, a reason for synchronizing fall time of (the timing to turn off) the drive pulse Dup with rise time of (the timing to turn on) the drive pulse Dvp is to reduce a current flowing on the capacitor C1 shown in Fig. 1 by causing the two currents in different directions to cancel each other out. Details of this arrangement will be described later.

Meanwhile, in reality, a delay time period occurs between a point when a command to turn off the drive pulse Dup is outputted and a point when the switch element S1 is actually turned off (disconnected). Likewise, a delay time period occurs between a point when a command to turn on the drive pulse Tvp is outputted and a point when the switch element S3 is actually turned on (connected).

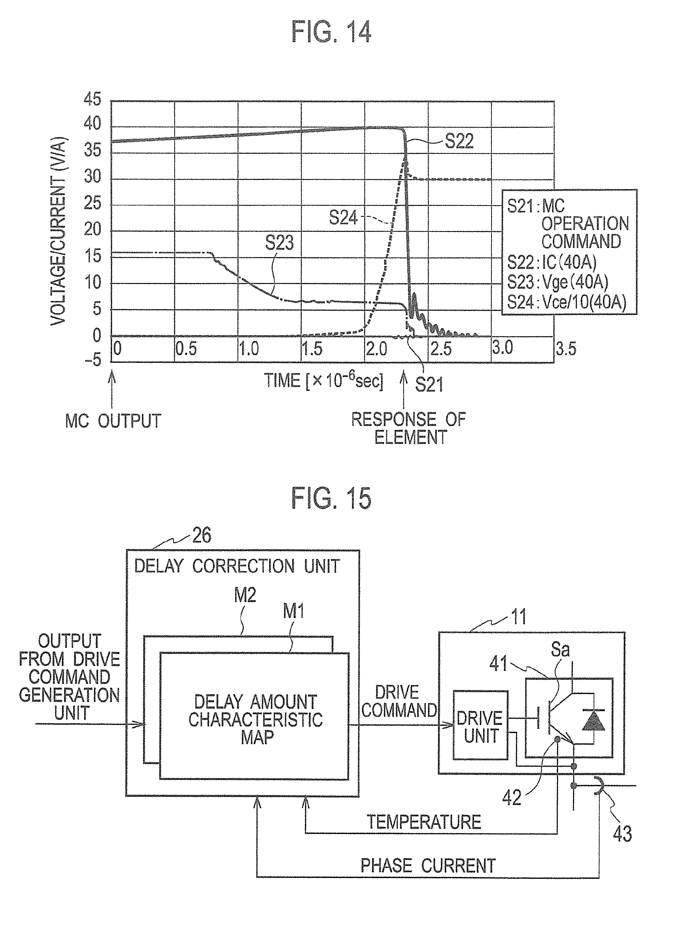

These delay time periods will be described below with reference to a characteristic diagram shown in Fig. 14. Fig. 14 is a characteristic diagram showing changes in a collector current Ic (S22), an emitter-gate voltage Vge (S23), and an emitter-collector voltage Vce (S24) of the switch element after a drive pulse (S21) outputted from the timing control unit 25 is stopped. As understood from Fig. 14, a delay time period of about 2 [µsec] occurs between the stop of the drive pulse and a rise of the voltage Vce, i.e., the disconnection of the switch element.

Incidentally, a delay time period in turning on the switch element is usually longer than a delay time period in turning off the switch element. Accordingly, even when the timing to output the off command (see Fig. 3(b)) for the drive pulse Dup is synchronized with the timing to output the on command for the drive pulse Tvp (see Fig. 3(d)), there may still be a case where the current flowing on the capacitor C1 cannot be reduced effectively because a time lag occurs between the actual timing to turn off the switch element S1 and actual timing to turn on the switch element S3. Therefore, in the embodiment, the delay correction unit 26 corrects the output timings of the drive pulses so as to synchronize the timings of the connection and disconnection of the switch elements in accordance with a method to be described later.

Next, a description will be given of a second procedure in which the timing control unit 25 shown in Fig. 2 generates the drive pulses Tup, Tun, Tvp, Tvn, Twp, and Twn by shifting the phases of the drive pulses Dup, Dun, Dvp, Dvn, Dwp, and Dwn, respectively. In the second procedure, the drive pulse Dvp shown in Fig. 3(c) is modified to two drive pulses denoted by reference signs s2 and s3 in Fig. 3(e) by dividing the drive pulse Dvp and shifting its phase.

The procedure for modifying the drive pulse will now be described. First, the voltage command value vv exceeds the carrier signal s1 at the time t4, and the drive pulse Tvp is turned on at the time t5 after the lapse of the period Δt. Thereafter, the drive pulse Tvp is turned off at time t8 when the carrier signal s1 reaches the lowest point. As a result, the drive pulse denoted by the reference sign s2 in Fig. 3(e) is generated. In addition, the time period between the point when the voltage command value vv exceeds the carrier signal s1 and the point when the voltage command value vv falls below the carrier signal s1, or the period between the time t5 and the time t6 (the duty width) shown in Fig. 3(c) is obtained and this duty width is recorded. Thereafter, the drive pulse Tvp is turned on again at the time t3 when the drive pulse Dup is turned off. The drive pulse Tvp is maintained in the on state for a period that is calculated by subtracting a period from the time t5 to the time t8 (the drive pulse s2) from the duty width. Then, the drive pulse Tvp is turned off. Alternatively, it is also possible to record a period from the time t8 to the time t6 (a duty width) and to determine an on-time period from the time t3 by using this duty width. As a consequence, the drive pulse Tvp is modified to the two drive pulses s2 and s3 shown in Fig. 3(e). In this case, a total pulse width of the two drive pulses s2 and s3 is equal to the drive pulse between the time t5 and the time t6 shown in Fig. 3(c).

According to the above-described first procedure, the drive pulse Tvp from the time t5 to the t6 shown in Fig. 3(d) passes over the time t8. On the other hand, the second procedure does not generate a drive pulse that passes over a boundary (the time t8) of the carrier signal s1. Thus, the second procedure has an advantage of avoiding deterioration in a performance of synchronization with the carrier signal.

Although Fig. 3 has described the example of synchronizing the timings of the drive pulses of the U phase and the V phase, it is also possible to synchronize the timings of the drive pulses of other combinations of two phases in a similar manner. Meanwhile, in the case of synchronizing the drive pulses of the three phases, it is possible to adopt a concept similar to the synchronization of the timings between the two phases. For example, rises of the drive pulses of the V phase and the W phase may be synchronized with a fall of the drive pulse of the U phase.

Next, a purpose of synchronizing the rise of the one drive pulse with the fall of the other drive pulse as show in Figs. 3(d) and 3(e) will be described.

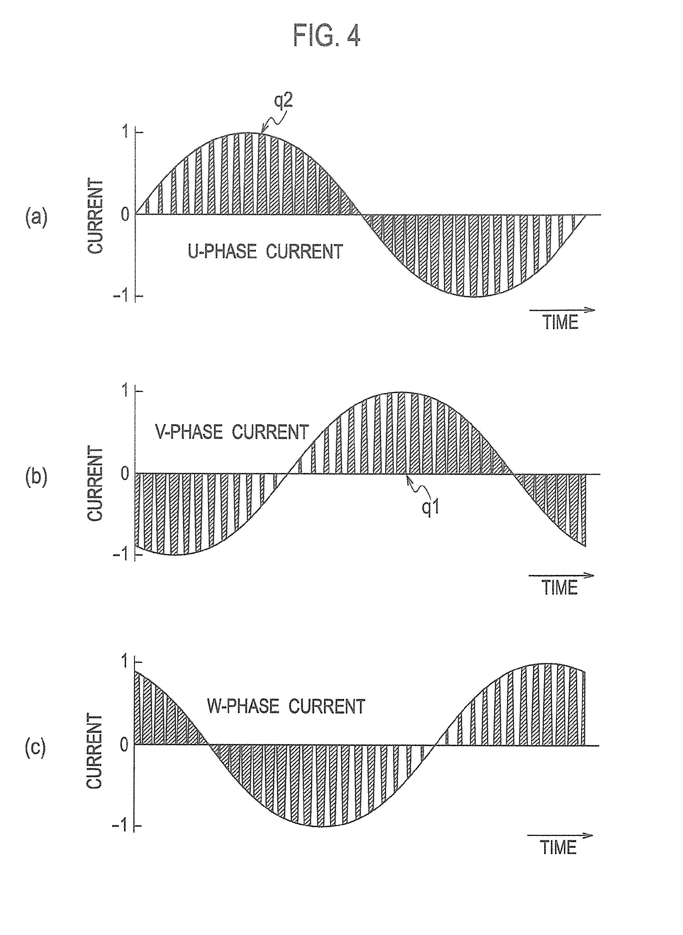

Figs. 4(a) to 4(c) are timing charts showing on and off operations of the switch elements S1 to S6 provided to the U phase, the V phase, and the W phase. White portions in the drawings show the timings when the upper switch elements S1, S3, and S5 are turned on, and hatched portions therein show the timings when the lower switch elements S2, S4, and S6 are turned on. Moreover, the waveforms of these phases are formed into sinusoidal waveforms which are shifted by 120 degrees from one another.

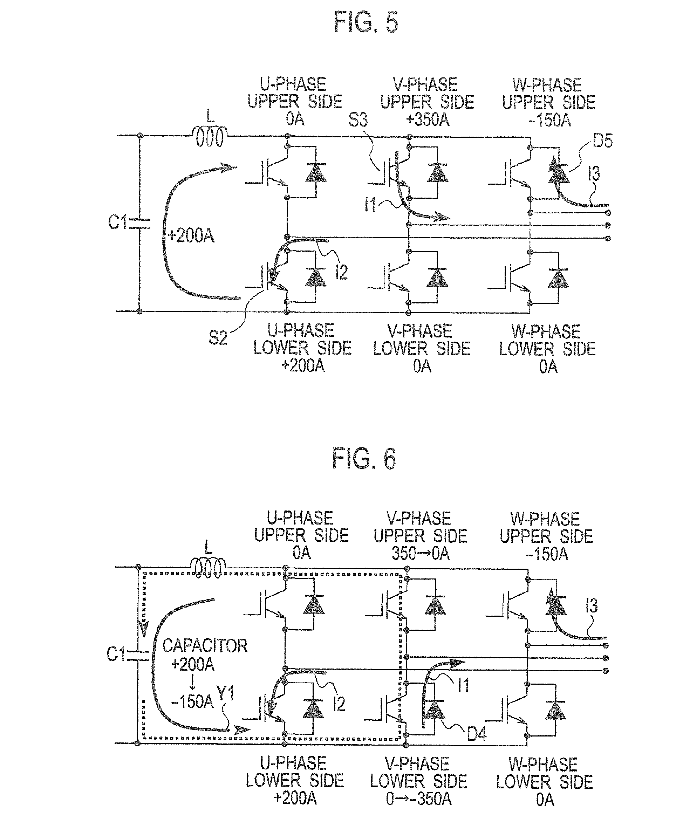

In addition, at a timing denoted by a reference sign q1 in Fig. 4(b) immediately before the V-phase upper switch element S3 is turned off, currents flow on all the phases as shown in Fig. 5. Specifically, a current I1 of +350 A flows on the V-phase upper switch element S3. A current I2 at +200 A flows on the U-phase lower switch element S2. Further, a current 13 of -150 A flows on the W-phase upper diode D5. Regarding the directions of the currents, the forward direction in each of the switch elements S 1 to S6 is indicated as positive while the reverse direction thereof is indicated as negative.

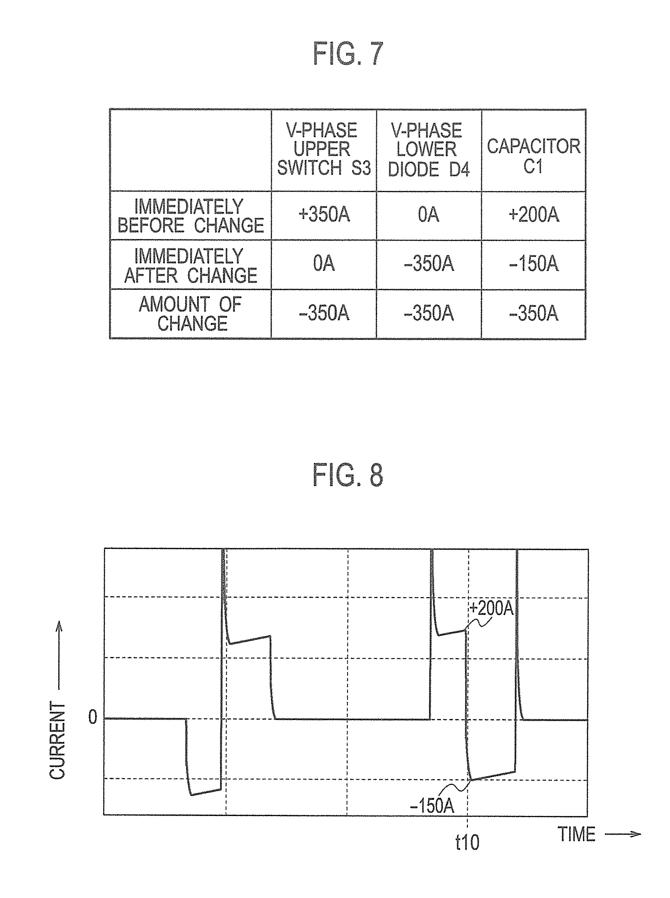

Thereafter, when the V-phase upper switch element S3 shifts from the on state to the off state, a free-wheeling mode is established in which the V-phase lower diode D4 is turned on as shown in Fig. 6 and the current I1 continues to flow to the motor 13 (the right direction in the drawing). At this time, current changes at the moment when the V-phase upper switch element S3 shifts from the on state to the off state occur as shown in Fig. 7.

Specifically, as shown in Fig. 7, when the V-phase upper switch element S3 shifts from the on state to the off state, the same amount of the current change (corresponding to -350 A) occurs in each of the V-phase upper switch element S3, the V-phase lower diode D4, and the capacitor C1. On the other hand, there are no changes in switching operations and hence no changes in the currents in the U-phase upper and lower arm bridge or the V-phase upper and lower arm bridge at the moment when the switch element S3 shifts from the on state to the off state. Thus, a rapid current change occurs in a circuit loop indicated with an arrow Y1 in Fig. 6 due to the switching operation of the V phase.

Fig. 8 is a timing chart showing a change of a current flowing on the capacitor C1 at the moment when the switch element S3 shifts from the on state to the off state. At time t10, the current changes from +200 A to -150 A. A large surge voltage (L×di/dt) attributed to parasitic inductance L in this current pathway occurs as a consequence.

In the embodiment, the surge voltage attributed to the parasitic inductance L is suppressed by: changing the timings to drive the switch elements S 1 to S6 of the respective phases; and thus reducing the rapid change in the current that flows into the capacitor C1. In other words, as described in Fig. 3, the rise of the drive pulse of the certain phase is synchronized with the fall of the drive pulse of the different phase. Thus, the surge voltage is suppressed by reducing the rapid change in the current flowing on the capacitor C1.

Further, as described previously, the delay correction unit 26 corrects the output timing of the drive pulse and thus synchronizes the actual timing to turn on the switch element with the timing to turn off the other switch element. In other words, the current change is suppressed and the occurrence of a sharp voltage rise is hence suppressed by synchronizing the connecting or disconnecting operation of the one switch element with the connecting or disconnecting operation of the other switch element.

Next, processing for cancelling out the current changes by synchronizing the operations of the switch elements, which cause the current changes in the mutually opposite directions, will be described.

Figs. 9(a), 9(b), 10(a), and 10(b) are explanatory diagrams showing operation examples of the U-phase switch elements S1 and S2, each of which shows a circuit representing an extracted section of the U-phase switch elements S1 and S2 provided in the inverter device 11. A node between the upper arm and the lower arm is connected to a U-phase input terminal of the motor 13. An arrow directed to the right in each of these drawings means a flow of the current toward the motor 13. This current is defined as a positive current. An arrow directed to the left in each of these drawings means a flow of the current from the motor 13. This current is defined as a negative current.

Fig. 9(a) shows a current change in the U phase at the moment when the upper switch element S1 shifted from the on state to the off state while the positive current was flowing toward the motor 13. At this time, the switch element S 1 is turned off from the state of a DC high potential side, i.e., from a state where the current is flowing from a positive side of the DC power supply 12 to the motor 13 in shown in Fig. 1, whereby the current is disconnected. Thus, a free-wheeling mode from a DC low potential side is established whereby the current flows toward the motor 13. This current change is equivalent to the occurrence of the current change as indicated with an arrow Y2.

Meanwhile, Fig. 9(b) shows a current change in the U phase at the moment when the lower switch element S2 shifted from the on state to the off state while the negative current was flowing from the motor 13. In this case, a current change indicated with an arrow Y3 occurs like in the case in Fig. 9(a) when the switch element S2 shifted from the on state to the off state. Specifically, it turns out that the current change in the counterclockwise direction (the arrow Y2 or Y3) occurs in each case of Figs. 9(a) and 9(b). Such a current change occurs on each of the U phase, the V phase, and the W phase.

In the meantime, Fig. 10(a) shows a current change at the moment of a shift of the U-phase upper switch element S1 to the on state from a state where the current is flowing from the lower diode D2 toward the motor 13 with the U-phase switch element S1 being off. Here, the current change occurs in a direction of an arrow Y4. On the other hand, Fig. 10(b) shows a current change at the moment when the U-phase lower switch element S2 shifts from the off state to the on state. Here, the current change occurs in a direction of an arrow Y5. Specifically, it turns out that the current change in the clockwise direction (the arrow Y4 or Y5) occurs in each case of Figs. 10(a) and 10(b). Such a current change occurs on each of the U phase, the V phase, and the W phase.

Accordingly, it is understood that the currents shown with the arrows Y2 to Y5 can be cancelled out or reduced by synchronizing the timings of any of the states in Figs. 9(a) and 9(b) with any of the states in Figs. 10(a) and 10(b).

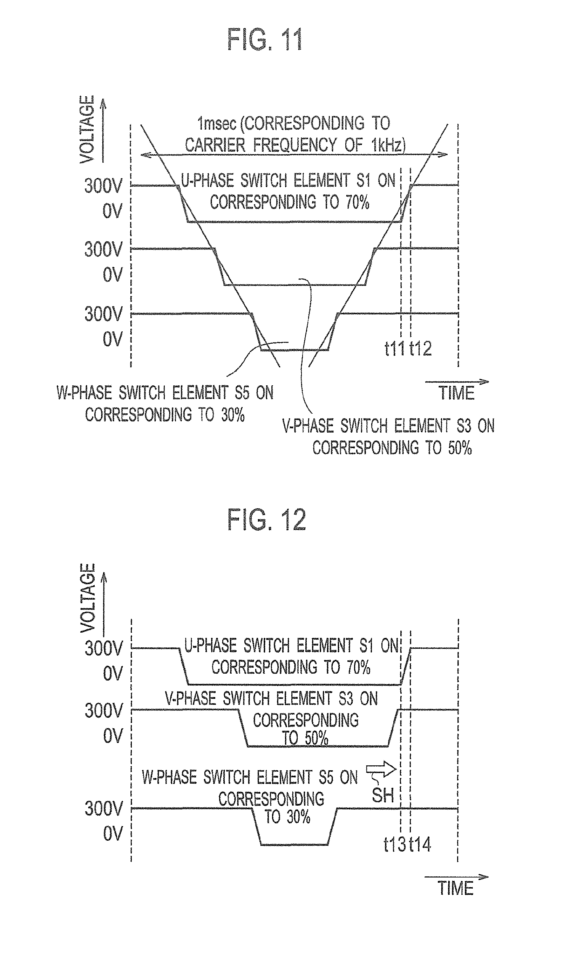

Now, procedures for generating the drive pulses to be outputted to the switch elements S1 to S6 will be described below. First, a description will be given of usual operations that have previously been adopted. Fig. 11 is an explanatory diagram showing procedures for determining pulse widths of the drive signals for the PWM control of the respective phases on the basis of a carrier signal having a predetermined carrier frequency (such as 1 [kHz]) and the U-, V- and W-phase voltage command values. Fig. 11 shows the procedures not adopting timing change processing according to the embodiment of the present invention. The pulse widths of the pulse signals to be outputted to the U-, V- and W-phase upper switch elements S1, S3, and S5 are determined by this processing. Here, the lower switch elements S2, S4, and S6 operate in the inverse manner to the operations of the respective switch elements S1, S3, and S5. For instance, the element S2 is off when the element S1 is on, or the element S1 is off when the element S2 is on.

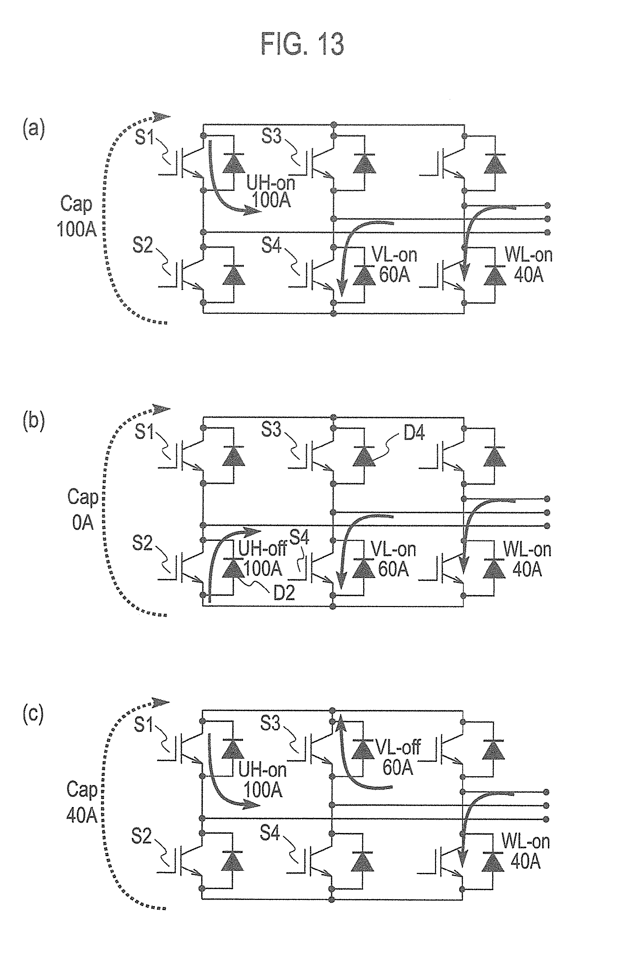

As shown in Fig. 11, a current similar to that in Fig. 9(a) flows when a state where the U-phase upper switch element S1 is on (time t11, voltage 0 V) changes to a state where the switch element S1 is off (time t12, voltage 300 V). That is to say, at this time, the current of 100 A flows in the counterclockwise direction on a circuit loop including the U-phase upper and lower arm bridge and the capacitor C1. In other words, the state shown in Fig. 13(a) changes into the state shown in Fig. 13(b). Hence, a capacitor current Cap changes from 100 A to 0 A whereby a surge voltage occurs due to the inductance L which is parasitic in this circuit loop.

On the other hand, in the case of adopting the timing change processing according to the embodiment of the present invention, the timing of a change of the V-phase upper switch element S3 from the on state to the off state is modified. Specifically, as shown in Fig. 12, a current similar to that in Fig. 9(a) flows when the U-phase upper switch element S1 changes from the on state (time t13) to the off state (time t14). In conformity to this timing, the timings of the switch elements S3 and S4 are shifted as indicated with reference sign SH in Fig. 12 in such a manner that the V-phase lower switch element S4 is turned on and the V-phase upper switch element S3 is turned off. Fig. 12 shows a voltage waveform of the V-phase upper switch element S3 and omits a voltage waveform of the V-phase lower switch element S4. As described previously, the voltage waveform of the switch element S4 is inverse to the voltage waveform of the element S3.

Accordingly, the V-phase lower switch element S4 is turned on after the V-phase upper switch element S3 was turned off. At this time, the switch element S4 changes from the off state (t13 in Fig. 12) to the on state (t14 in Fig. 12), and a current similar to that in Fig. 10(b) flows thereon. Here, the state shown in Fig. 13(c) changes into the state shown in Fig. 13(b). Hence, a current change of 60A in the clockwise direction occurs in a circuit loop including the V-phase upper and lower arm bridge and the capacitor C1.

At the same time, a current change of 100 A in the counterclockwise direction occurs in the circuit loop including the U-phase upper and lower arm bridge and the capacitor C1. For this reason, the directions of the current changes are opposite to each other whereby the current of 100A in the counterclockwise direction is offset by the current of 60 A in the clockwise direction. Thus, the capacitor current Cap changes from 40 A to 0 A whereby the current change is reduced to only 40 A in the counterclockwise direction. In other words, at the moment when the U-phase upper switch element S1 changes from the on state to the off state and the V-phase lower switch element S4 also changes from the off state to the on state, the state shown in Fig. 13(c) changes into the state shown in Fig. 13(b). For this reason, the current change is 40 A. The current change is thus reduced as compared to the case of not performing the timing change processing.

Here, the mere synchronization of the output timings of the drive pulses Tup, Tvp, Twp, Tun, Tvn, and Twn to be outputted from the timing control unit 25 shown in Fig. 1 results in out-of-synchronization of the on and off timings due to a difference between time periods before the respective switch elements actually turn on or off after the corresponding drive pulses are outputted (i.e., a time period required to connect or disconnect each of the switch elements). As a consequence, there may be a case where: the current changes are not synchronized with each other; and accordingly, the above-mentioned effects of suppressing the current changes cannot be obtained. In this embodiment, the delay correction unit 26 performs the processing for correcting the output timings of the drive pulses so that the timings when the switch elements actually turn on or off coincide with one another. That is to say, the output timings of the drive pulses are corrected with consideration given to delay time periods before the respective switch elements are turned on and off.

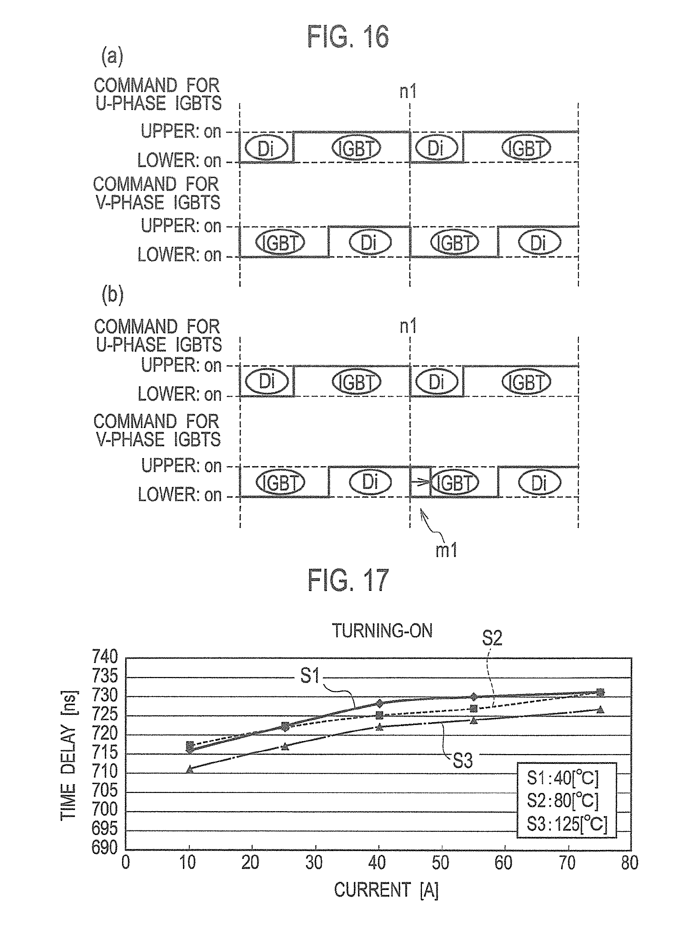

In other words, when the state shown in Fig. 13(c) changes into the state shown in Fig. 13(b), for example, the drive pulses are outputted as described below from the timing control unit 25 shown in Fig. 1. Specifically, as shown in Fig. 16(a), at time n1 when the switch element S1 in the U-phase upper arm is in the on state, an off command drive pulse is outputted, whereby the switch element S 1 is turned off. Thus, the current flows on the diode D2 in the U-phase lower arm. Simultaneously, at time n1 when the current is flowing to the Diode D3 in the V-phase upper arm, an on command for the switch element S4 in the V-phase lower arm is outputted, whereby the switch element S4 is turned on. In this case, the delay time period before the switch element S1 is turned off is not equal to the delay time period before the switch clement S4 is turned on.

Accordingly, in the embodiment, the timing to output the on command to the switch element S4 is set back by a time period m1 as shown in Fig. 16(b). Thus, the timing to turn off the switch element S1 and the timing to turn on the switch element S4 are practically synchronized with each other.

Now, processing operations by the delay correction unit 26 will be described below in detail. Fig. 15 is a block diagram showing the delay correction unit 26 according to the first embodiment of the present invention, a switch circuit 41 provided in the inverter device 11, and a drive circuit of the switch circuit 41. The switch circuit 41 is provided with: a temperature sensor (a temperature detection unit) 42 configured to measure an ambient temperature of a switch element Sa such as an IGBT; and a current sensor (a current detection unit) 43 configured to detect a phase current thereof. Further, a temperature signal detected with the temperature sensor 42 and a current signal detected with the current sensor 43 are both supplied to the delay correction unit 26. Note that the current sensor 19 shown in Fig. 1 can also be used as the current sensor 43.

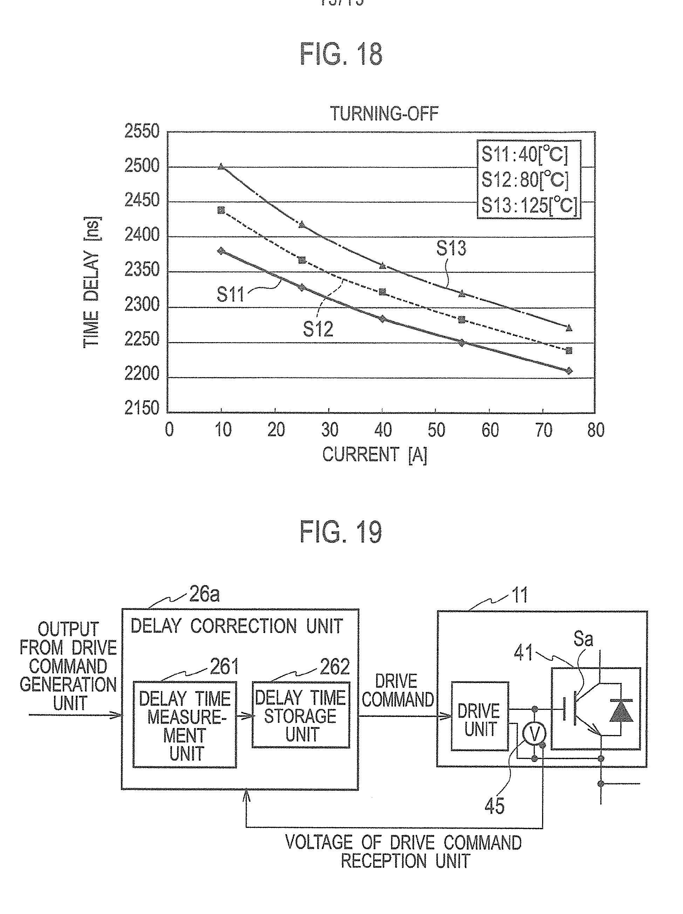

The delay correction unit 26 stores delay amount characteristic maps (correspondence maps) M1 and M2 which indicate characteristics as shown in Fig. 17 and Fig. 18. Fig. 17 is a delay amount characteristic map showing the delay time period before the switch element Sa shifts from the off state to the on state, or before the switch element Sa performs the so-called turning-on. Fig. 18 is a delay amount characteristic map showing the delay time period before the switch element Sa shifts from the on state to the off state, or before the switch element Sa performs the so-called turning-off.

In the delay amount characteristic map shown in Fig. 17, the horizontal axis indicates the current flowing on the switch element Sa and the vertical axis indicates the delay time period. Further, characteristic curves S1 to S3 respectively for ambient temperatures are set as examples of a condition of a circuit to which the switch element is connected. The curve S1 shows the case where the ambient temperature is equal to 40°C. The curve S2 shows the case where the ambient temperature is equal to 80°C. The curve S3 shows the case where the ambient temperature is equal to 125°C. As shown in Fig. 17, it turns out that the delay time period before the switch element Sa turns on becomes longer as the current flowing thereon becomes larger, and the delay time period before the switch element Sa turns on becomes longer as the ambient temperature becomes lower.

Meanwhile, in the delay amount characteristic map shown in Fig. 18, the horizontal axis indicates the current flowing on the switch element Sa and the vertical axis indicates the delay time period. Further, characteristic curves S11 to S 13 respectively for ambient temperatures are set as examples of the condition of the circuit to which the switch element is connected. The curve S11 shows the case where the ambient temperature is equal to 40°C. The curve S12 shows the case where the ambient temperature is equal to 80°C. The curve S13 shows the case where the ambient temperature is equal to 125°C. As shown in Fig. 18, it turns out that the delay time period before the switch element Sa turns off becomes shorter as the current flowing thereon becomes larger, and the delay time period before the switch element Sa turns off becomes shorter as the ambient temperature becomes lower.

In addition, the delay time period in the turning-on is in a range from about 700 to 750 [nsec] as shown in Fig. 17. On the other hand, the delay time period in the turning-off is in a range from about 2200 to 2500 [nsec] as shown in Fig. 18. It turns out that the delay time periods are markedly different between the turning-on and the turning-off.

Moreover, in the embodiment, when the ambient temperature and the phase current are provided, the delay correction unit 26 acquires a delay time period in the turning-on and a delay time period in the turning-off corresponding to the ambient temperature and the phase current by referring to the delay amount characteristic maps shown in Fig. 17 and Fig. 18, and adjusts the timings to output the on command signals on the basis of the delay time periods.

Specifically, the delay time period denoted by the reference sign m1 in Fig. 16 is found, and the switch element is turned on with a delay by that delay time period. To be more precise, when the state shown in Fig. 13(c) changes into the state shown in Fig. 13(b), the switch element S1 shown in Fig. 13(c) is turned off, and then the switch element S4 is turned on with a delay by the delay time period denoted by reference sign m1 in Fig. 16. As a result, the current generated in the turning-on of the switch element S 1 is synchronized with the current in the turning-on of the switch element S4. Thus, it is possible to suppress a sharp voltage rise. As a consequence, it is possible to effectively reduce the surge voltage that occurs due to the parasitic inductance L in this circuit loop.

In this way, according to the power conversion device of the first embodiment, the change in the phase currents can be suppressed by synchronizing the connecting or disconnecting operation of the one switch element, such as the operation to turn off the element S1 as shown in Fig. 13(c), with the connecting or disconnecting operation of the other switch element, such as the operation to turn on the element S4 as shown in Fig. 13(b). Further, when the connecting and disconnecting operations of the switch elements are synchronized, the output timings of the on command signals and the off command signals to be outputted to the respective switch elements are corrected by considering the delay time periods of the switch elements. Thus, it is possible to reliably synchronize the connecting and disconnecting operations of the switch elements with one another, and thus to prevent a sharp voltage rise. In addition, the correction of the delay time periods does not require many constituents. Hence, it is possible to suppress a rise in cost associated with an increase in the number of components.

As shown in Fig. 16, the above-described first embodiment has explained the example in which the output timing of the on command signal to the switch element S4 is corrected so as to synchronize the timing to turn on the switch element S4 with the timing to turn off the switch element S1. However, the on timing and the off timing only need to be synchronized relative to each other. Hence, it is also possible to correct the output timing of an off command signal to the switch element S1 so as to synchronize the timing to turn off the switch element S1 with the timing to turn on the switch element S4.

Moreover, the delay correction unit 26 stores the delay time periods when the switch elements are turned on and the delay time periods when the switching elements are turned off in the form of the delay amount characteristic maps, and corrects each delay time period by referring to the delay amount characteristic maps. In this way, the delay correction unit 26 can correct the delay time periods without requiring a large computational burden.

Furthermore, the delay time periods are set on the basis of the ambient temperatures as well as the magnitudes of the phase currents of the switch elements. Accordingly, it is possible to correct the delay time periods with high accuracy depending on circuit conditions.

### [Second Embodiment]

Next, a power conversion device according to a second embodiment will be described with reference to Fig. 19. The second embodiment is different in that the delay correction unit 26 shown in Fig. 1 is replaced with a delay correction unit 26a shown in Fig. 19, and in that the switch circuit 41 provided in the inverter device 11 is provided with a voltage sensor (a voltage detection unit) 45. The rest of the configuration is similar to that described in the first embodiment, and descriptions thereof are omitted.

The delay correction unit 26a shown in Fig. 19 includes a delay time measurement unit 261 and a delay time storage unit 262. The delay time measurement unit 261 measures a time period before the switch element is turned on after a drive command is transmitted to the switch element Sa (a time period required to connect or disconnect the switch element Sa) in an arbitrary control cycle. In the measurement, a voltage between the base and the emitter of the switch element Sa is measured with the voltage sensor 45; on the basis of the voltage change, it is judged that the switch element Sa shifts from the off state to the on state; and thus, the lapse of the time period until the point of the shift is measured.

In addition, the delay time measurement unit 261 measures a time period before the switch element is turned off after the drive command to be transmitted to the switch element Sa is stopped (a time period required to connect or disconnect the switch element Sa) in the arbitrary control cycle. In this measurement, as well, a shift of the switch element Sa from the on state to the off state is determined on the basis of the voltage detected with the voltage sensor 45, and the time period elapsed until the point of the shift is thus measured. Then, the delay time period in the turning on and the delay time period in the turning-off are stored in the delay time storage unit 262.

Thereafter, in the subsequent control cycles, the output timings of the on commands and the off commands are controlled so as to synchronize the timings to turn on and off the respective switch elements with one another on the basis of the delay time periods in the on turning and the delay time periods in the turning-off, which are stored in the delay time storage unit 262. To be more precise, like in the above-described first embodiment, when the state shown in Fig. 13(c) changes into the state shown in Fig. 13(b), for example, the timing to turn on the switch element S4 is set back by the amount denoted by reference sign m1 shown in Fig. 16(b) relative to the timing to output the off command to the switch elements S1. Thus, it is possible to reliably synchronize the connecting and disconnecting operations of the switch elements.

In this way, the power conversion device according to the second embodiment measures the delay time periods in the turning-on and the delay time periods in the turning-off, respectively, and corrects the output timings of the on command signals and the off command signals to be outputted to the switch elements by using these delay time periods. Thus, it is possible to reliably synchronize the connecting and disconnecting operations of the switch elements, and to prevent a sharp voltage rise. In addition, the correction of the delay time periods does not require many constituents like in the above-described first embodiment. Hence, it is possible to suppress a rise in cost associated with an increase in the number of components.

Although the contents of the present invention have been described citing the embodiments, it is obvious to those skilled in the art that the present invention is not limited only to these descriptions and various modifications and improvements are possible.

For example, the above-described embodiments have explained the example of generating the three-phase alternating current by use of the inverter device of the PWM type. However, the present invention is also applicable to a case of generating the three-phase alternating current by use of an inverter device of a type other than the PWM type or a multiphase DC/DC converter.

The entire contents of Japanese Patent Application No. 2011-192492 (filing date: September 5, 2011) are incorporated herein.

### INDUSTRIAL APPLICABILITY

The power conversion device and a power conversion method according to the present invention are configured to output the drive command signals for the respective switch elements in such a way that the directions of the current change attributed to the connecting or disconnecting operation of one switch element and the current change attributed to the connecting or disconnecting operation of another switch element can be opposite to each other, and to correct the timings to output the drive command signals to the respective switch elements by using the delay correction unit. Thus, it is possible to synchronize the currents flowing on the respective switch elements, and to reliably suppress the current change on a common bus. As a result, a voltage rise can be reliably prevented from occurring on a circuit. Hence, the present invention is industrially applicable.

### REFERENCE SIGNS LIST

- 11: inverter device
- 12: DC power supply
- 13: motor
- 14: motor control device
- 18: rotational frequency sensor
- 19: current sensor
- 21: torque control unit
- 22: current control unit
- 23: voltage command calculation unit
- 24: pulse width calculation unit
- 25: timing control unit
- 26, 26a: delay correction unit
- 31: drive command generation unit
- 41: switch circuit
- 42: temperature sensor
- 43: current sensor
- 45: voltage sensor
- 100: power conversion device
- 261: time measurement unit
- 262: time storage unit

## Claims

1. A power conversion device comprising:
switch elements of a plurality of phases connected to a common bus; and
a control unit configured to control the switch elements, wherein
the control unit includes:
a drive command generation unit configured to generate drive command signals for the switch elements, the drive command signals designed to control connecting and disconnecting operations of the switch elements of the plurality of phases in such a way that a direction of a current change attributed to a connecting or disconnecting operation of one switch element and a direction of a current change attributed to a connecting or disconnecting operation of another switch element are opposite to each other; and
a delay correction unit configured to correct output timings of the drive command signals to be outputted to the switch elements so as to synchronize connecting and disconnecting timings of the switch elements with each other.

2. The power conversion device according to claim 1, wherein the delay correction unit obtains a difference in time between a time period required to connect or disconnect the one switch element and a time period required to connect or disconnect the other switch element, and corrects the output timings of the drive command signals to be outputted to the switch elements on the basis of the difference in time so as to synchronize the connecting and disconnecting timings of the switch elements with each other.

3. The power conversion device according to claim 2, wherein the delay correction unit includes a correspondence map showing correspondence between a condition of a circuit to which each of the one switch element and the other switch element is connected and the time period required to connect or disconnect the switch element, and obtains the difference in time by referring to the correspondence map on the basis of the conditions of the circuits.

4. The power conversion device according to claim 3, wherein
the condition of the circuit includes a value of a current flowing on each switch element at the time of connection or disconnection and an ambient temperature of the switch element,
the power conversion device further comprises:
a current measurement unit configured to measure the current flowing on each switch element; and
a temperature measurement unit configured to measure the ambient temperature, and
the delay correction unit obtains the difference in time by referring to the correspondence map on the basis of the current measured by the current measurement unit and the ambient temperature measured by the temperature measurement unit.

5. The power conversion device according to claim 2, wherein the delay correction unit measures, in a certain control cycle, the time period required to connect or disconnect the one switch element and the time period required to connect or disconnect the other switch element, and defines a difference between the measured time periods as the difference in time.

6. The power conversion device according to claim 5, further comprising:
a voltage measurement unit configured to measure a voltage occurring in each switch element, wherein
the delay correction unit measures a time period before a voltage changes after the command signal the drive command signal is transmitted, as the time period required to connect or disconnect the switch element.

7. A power conversion method comprising:
generating drive command signals for switch elements of the plurality of phases connected to a common bus, the drive command signals designed to control connecting and disconnecting operations of the switch elements in such a way that a direction of a current change attributed to a connecting or disconnecting operation of one of the switch elements and a direction of a current change attributed to a connecting or disconnecting operation of another one of the switch elements are opposite to each other; and
correcting output timings of the drive command signals to be outputted to the switch elements so as to synchronize connecting and disconnecting timings of the switch elements with each other.
